# EUROPEAN PATENT APPLICATION

(11) **EP 1 473 843 A1**
(43) Date of publication of application: **03.11.2004**
(21) Application number: 03291058.0
(22) Date of filing: 30.04.2003
(51) Int. Cl.: H04B 1/38

(54) **Apparatus for detecting a module**

(71) Applicant: Motorola, Inc., Schamburg, Illinois 60196 (US)
(72) Inventor: Oddoart, Ludovic, 31270 Frouzins (FR); Trauth, Gerhard, 31600 Muret (FR); Voorwinden, Cor, Toulouse, Haute-Garonne 31100 (FR)
(74) Representative: Wharmby, Martin Angus

(57) **Abstract**

Apparatus for detecting a module comprising a detector arranged to use an alternating out of band signal to detect if a module is coupled to the apparatus.

## Description

The present invention relates to apparatus for detecting a module.

Many everyday electronic devices typically include detection circuitry to allow the device to determine whether an electronic module has been electrically coupled to the device, thereby allowing the electronic device to determine whether a signal needs to be transmitted to the module. For example, a radiotelephone typically includes a headset detection circuit to determine whether a headset has been connected to the radiotelephone, thereby allowing the radiotelephone to determine whether to transmit an audio signal to the headset interface circuit.

However, where a device needs to communicate to a connected module an alternating signal that is intermittent in nature, for example, audio, it is necessary for the detection circuit to include additional components to create a direct current (DC) path between the device and module, thereby allowing the module to be detected utilising a DC signal.

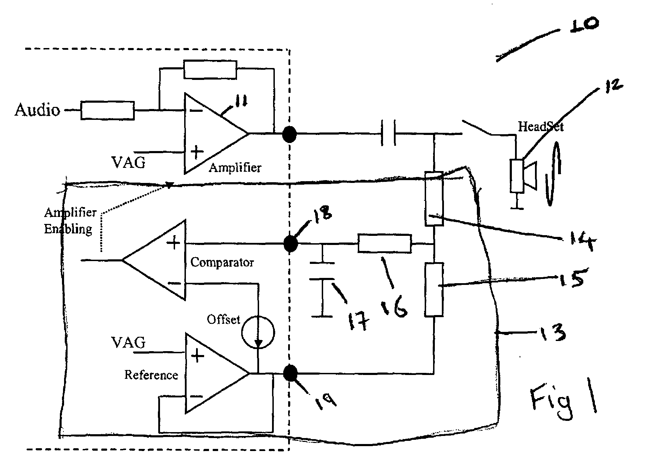

However, the use of additional circuitry typically requires the use of additional passive components and the use of additional integrated circuit pins. For example, a prior art radiotelephone detection circuit 10 shown in figure 1 includes an amplifier 11, having an audio input, capacitively coupled to a headset 12. To allow the radiotelephone to determine whether a headset 12 is connected a comparator circuit 13 is utilised that requires four additional passive components 14,15,16,17 and the use of two additional IC pins 18,19.

It is desirable to improve this situation.

In accordance with a first aspect of the present invention there is provided an apparatus for detecting a module comprising a detector arranged to use an alternating out of band signal to detect if a module is coupled to the apparatus.

This provides the advantage of allowing an electronic device to detect if a module is capacitively coupled to the device without requiring an extra DC path and without requiring the use of additional IC pins or passive components.

Preferably the alternating out of band signal is an audio signal having a frequency above a users hearing range.

Preferably the detector is arranged to use the alternating out of band signal to detect the presence of a resistive load associated with the module.

Preferably the apparatus further comprising an amplifier, wherein the out of band signal is input into the amplifier to cause the amplifier to generate a current flow when a module is capacitively coupled to the apparatus; and means for detecting a current flow generated by the amplifier.

Preferably the detector forms part of a clamp stage of a circuit for determining if a module has been capacitively coupled to the apparatus.

Preferably the detector forms part of an audio stage of a circuit for determining if a module has been capacitively decoupled from the apparatus.

Preferably the detector further comprising means for switching between the audio stage and clamp stage dependent upon whether a module is capacitively coupled to the apparatus.

Preferably the module is a loudspeaker.

Suitably the loudspeaker forms part of a radiotelephone headset.

An embodiment of the invention will now be described, by way of example, with reference to the drawings, of which:
Figure 1 illustrates a prior art detection circuit;
Figure 2 illustrates a detection circuit according to an embodiment of the present invention;
Figure 3 illustrates a detection circuit according to an embodiment of the present invention;
Figure 4 shows a graph illustrating current flow in a detection circuit according to an embodiment of the present invention;
Figure 5 illustrates a detection circuit according to an embodiment of the present invention.

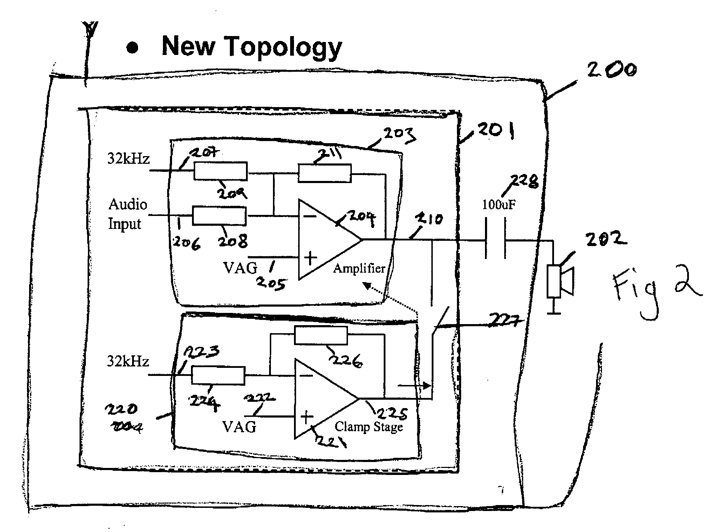

Figure 2 illustrates a radiotelephone 200 having a simplified radiotelephone circuit 201 for detecting whether a headset 202 is coupled to the radiotelephone circuit 201, and if a headset 202 is coupled to the radiotelephone 201 circuit the circuit is further arranged to provide an audio signal to the headset 202.

The circuit 201 has an audio stage 203 and a clamp stage 220.

The audio stage 203 includes and op-amp 204 having its non-inverting input coupled to an audio reference signal line 205 (for example electrical ground) and its inverting input coupled to both an audio input line 206 and a 32 kHz out of band signal line 207 via a first resistor 208 and a second resistor 209 respectively. The op-amp output line 210 is coupled to the inverting input via a third resistor 211 where the voltage gain of the op-amp 204 is determined by the values of the first, second and third resistors 208,209,211, as is well known to a person skilled in the art.

The clamp stage 220 includes an op-amp 221 having its non-inverting input coupled to an audio reference signal line 222 and its inverting input coupled to a 32 kHz out of band signal line 223 via a fourth resistor 224. The op-amp output line 225 coupled to the inverting input via a fifth resistor 226 where the voltage gain of the op-amp 221 is determined by the values of the fourth 224 and fifth resistors 226, as is well known to a person skilled in the art.

The clamp stage 220 is connected to the audio stage 203 via switch 227, with the switch 227 placed in an open position when a headset 202 is connected to the circuit 201 to electrically isolating the clamp stage 220 from the audio stage 203, as described below.

Included in the connection between the circuit 201 and the headset 202, when connected, is a capacitor 228 that is used to isolate DC signals from the headset 202.

The audio stage 203 is arranged to provide an audio signal to a headset 202, when connected to the radiotelephone 200, while the clamp stage 220 is used to minimise noise on the audio line when a headset 202 is initially coupled to the radiotelephone 200. As such, the use of a clamp stage 220 is a desirable but not essential feature of the present invention.

The switch 227 is arranged to electrically couple the clamp stage 220 to the output line 210 of the audio stage op-amp 204 when a headset 202 is not connected to the radiotelephone 200. However, as stated above, once a headset 202 has been connected to the radiotelephone circuit 201 the switch 227 is opened, isolating the clamp stage 220 from the audio stage 203. This allows the clamp stage 220 to minimise electrical noise when the headset 202 is initially connected to the audio stage op-amp 204, as is well known to a person skilled in the art.

For the purposes of the current embodiment two cases of headset detection will now be considered, first, detecting the connection of a headset and, secondly, detecting the disconnection of a headset (i.e. detecting when a headset is not connected to the radiotelephone).

The first case, detecting the connection of a headset to the radiotelephone 200, is performed via the use of the 32 kHz out of band audio signal input to the clamp stage op-amp 221.

When no headset is connected to the radiotelephone 200 the switch 227 is closed coupling the clamp stage 220 to the audio stage 203. However, although the 32 kHz out of band audio signal is input to the clamp stage op-amp 221 no current flow occurs in the clamp stage op-amp 221 due to the high impedance output of the audio stage op-amp 204. Accordingly, the lack of current flow in the clamp stage op-amp 221 indicates that no headset has been connected to the radiotelephone 200. On connecting a headset 220 to the radiotelephone 200, via capacitor 228, the 32 kHz signal is feed to the headset 202 causing current flow to occur in the clamp stage op-amp 221, thereby indicating that a headset has been connected.

The use of the 32 kHz out of band audio signal is used to establish a constant signal between the detection circuit and the headset 202, when connected to the radiotelephone circuit 201, while avoiding the possibility of the signal being detected by a user or interfering with an audio signal transmitted on the audio line. Accordingly, as would be appreciated by a person skilled in the art, the use of any out of band signal could be used that meets this criteria (e.g. any signal frequency that can not be heard by a typical user when using the headset).

Once a headset 202 has been connected to the radiotelephone 200 the switch 227 is opened isolating the clamp stage 220 from the audio stage 203, as described above.

The second case, detecting the disconnection of a headset from the radiotelephone 200, is performed via the use of the 32 kHz out of band audio signal input to the audio stage op-amp 204.

When a headset 202 is connected to the radiotelephone 200 the 32 kHz out of band audio signal is feed to the headset 202, via capacitor 228, causing a current flow to occur in the audio stage op-amp 204, whether or not an audio signal is being input into the audio stage op-amp 204 via the audio line 206 Accordingly, identification of a current flow in the audio stage op-amp 204 confirms that a headset 202 has been connected to the radiotelephone 200. However, on disconnection of the headset 202 the audio stage op-amp 204 goes open circuit causing the current flow, generated by the 32 kHz out of band audio signal, to stop, therefore, providing an indication that the headset 202 has been disconnected.

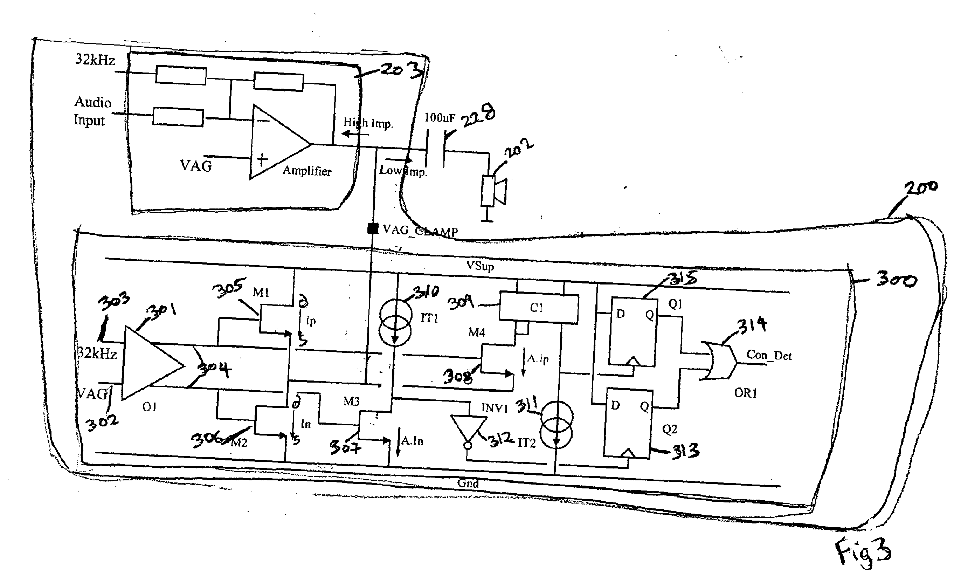

Figure 3 shows an alternative embodiment of a headset detection circuit 201 having an identical audio stage 203 to that shown in figure 2 with a modified clamp stage 300.

The clamp stage 300 includes an op-amp 301 having its non-inverting input coupled to an audio reference signal line 302 and its inverting input coupled to a 32kHz out of band signal line 303.

The op-amp output line 304 is coupled to the gate of a first N-MOS transistor 305, to the gate of a second N-MOS transistor 306, the gate of a third N-MOS transistor 307 and to the gate of a fourth N-MOS transistor 308

The drain of the first N-MOS transistor 305 is coupled to a first reference voltage V_{DD} (e.g. voltage supply). The source of the first N-MOS transistor 305 is coupled to the drain of the second N-MOS transistor 306, while the source of the second N-MOS transistor 306 is coupled to a second reference voltage V_{CC} (e.g. voltage ground).

The source of the third N-MOS transistor 307 is coupled to the second reference voltage V_{SS}, while the drain of the third N-MOS transistor 307 is coupled to a first current source 310, with the first current source 310 also being coupled to the first reference voltage V_{DD}.

The source of the fourth N-MOS transistor 308 is coupled to the source and drains of the first N-MOS transistor 305 and second N-MOS transistor 306 respectively and is used as the coupling point to the audio stage 203 designated VAG_CLAMP, where the audio stage 203 acts as high impedance. The coupling to the audio stage 203 acts as the clamp stage output. The drain of the fourth N-MOS transistor 308 is coupled to a current mirror 309 that is also coupled to the first reference voltage V_{DD}.

Also coupled to the current mirror 309 is a second current source 311 that is also coupled to the second voltage reference V_{SS}.

The input of an inverter 312 is coupled between the first current source 310 and the drain of the third N-MOS transistor 307, with the output of the inverter 312 being coupled to the clock input of a first D-type flip flop 313. The D input of the first flip flop 313 is coupled to the first reference voltage V_{DD} and the Q output is coupled to a first input of an OR gate 314.

A second D-type flip flop 315 has its clock input coupled between the current mirror 309 and the second current source 311. The D input of the second flip flop 315 is coupled to the first reference voltage V_{DD}, while the Q output is coupled to a second input of the OR gate 314.

The function of the first N-MOS transistor 305 and second N-MOS transistor 306 is to ensure Class AB biasing of the clamp stage output, where a current flow lp flows from the first N-MOS transistor 305 and a current flow I_{N} is sunk into the second N-MOS transistor 306.

The third N-MOS transistor 307 is arranged to provide a current copy A.I_{N} of the IN current flow of the second N-MOS transistor 306.

The fourth N-MOS transistor 308 is arranged to provide a current copy A.I_{P} of the I_{P} current flow of the first N-MOS transistor 305.

The clamp stage 300 operates in the following manner.

When no headset is connected to the detection circuit 201 there will be no load on the VAG.CLAMP point, consequently there will be current flow I_{P} and I_{N} through the first N-MOS transistor 305 and second N-MOS transistor 306 respectively. This results in current mirror flow A.I_{N} being less than the first current source 310 and the input of the inverter 312 being set at 1 and the output as 0, which acts as the first flip flop clock input. Additionally, the mirrored current flow A.I_{P} is less than the second current source 311, which acts to set the clock input of the second flip flop to 0.

When a headset 202 is connected to the detection circuit 200, via the 100uF capacitor 228, either a positive or negative 32kHz alternating signal could be output from the clamp stage 300.

For a positive 32kHz alternating out of band signal, the 32kHz signal causes a large current to flow through the first N-MOS transistor 305. This results in current mirror flow A.I_{P} being greater than the second current source 311, this causes the clock input of the second flip flop 315 to change from 0 to 1 making the flip flop output change from 0 to 1 thus providing an indication of a headset.

For a negative 32kHz alternating out of band signal, the 32kHz signal causes a large current to be sunk into the second N-MOS transistor 306. This results in current mirror flow A.lp being greater than the second current source 311, this causes the input of the inverter 312 to change from 1 to 0 and consequently the clock input for the first flip flop 313 is changed from 0 to 1 making the first flip flop output change from 0 to 1, thus providing an indication of a headset.

The OR gate 314 will indicate the detection of a headset for both positive and negative alternating signals.

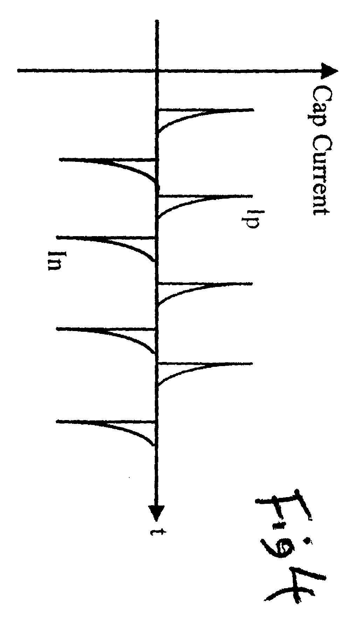

Figure 4 illustrates the current flow caused by the 32kHz signal flowing from the clamp stage 300 into the 100uF capacitor 228 when a headset 202 is coupled to the detection circuit 200.

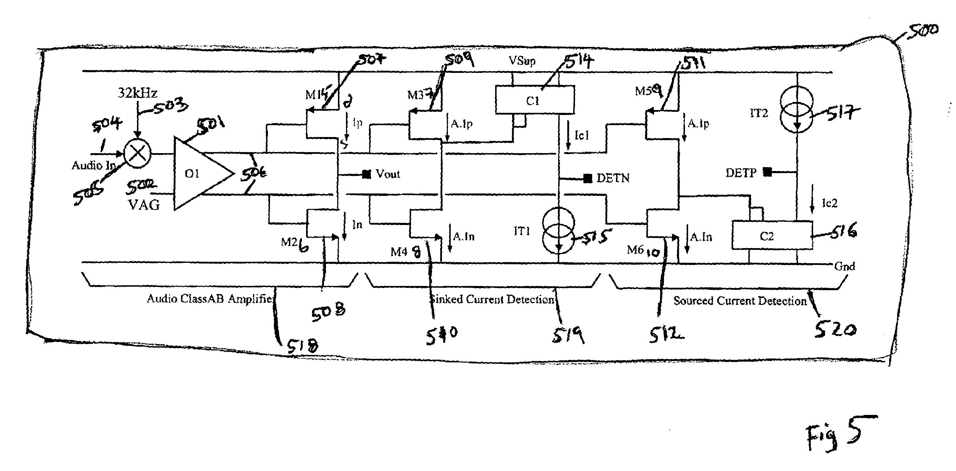

Figure 5 shows an alternative audio stage 500 to that shown in figure 2 and 3, which can be used in conjunction with either the clamp stage 220 illustrated in figure 2 or the clamp stage 300 illustrated in figure 3.

The audio stage 500 includes an op-amp 501 having its non-inverting input coupled to an audio reference signal line 502 and its inverting input coupled to a combined 32kHz out of band signal line 503 and audio line 504 via a mixer 505.

The op-amp output line 506 is coupled to the gate of a fifth N-MOS transistor 507, to the gate of a sixth N-MOS transistor 508, the gate of a seventh N-MOS transistor 509, the gate of an eighth N-MOS transistor 510, the gate of a ninth N-MOS transistor 511 and to the gate of a tenth N-MOS transistor 512.

The drain of the fifth, seventh and ninth N-MOS transistors 507,509,511 are coupled to a first reference voltage V_{DD}. The source of the fifth, seventh and ninth N-MOS transistors 507, 509, 511 are coupled to the drains of the sixth, eighth and tenth N-MOS transistors 508, 510,512 respectively, while the sources of the sixth, eighth and tenth N-MOS transistors 508,510,512 are coupled to a second reference voltage V_{SS}.

A second current mirror 514 is connected to the first reference voltage V_{DD} as well as between the source of the seventh N-MOS transistor 509 and the drain of the eight N-MOS transistor 510. Additionally, the current mirror 514 is connected to a third current source 515 with the third current source 515 also being connected to the second reference voltage V_{SS}.

A third current mirror 516 is connected to the second reference voltage V_{SS} and between the source of the ninth N-MOS transistor 511 and the drain of the tenth N-MOS transistor 512. Additionally, the current mirror 516 is connected to a fourth current source 517 with the fourth current source 517 also being connected to the first reference voltage V_{DD}.

Located between the source of the fifth N-MOS transistor 507 and the drain of the sixth N-MOS transistor 508 is a voltage out point Vout. Located between the second current mirror 514 and the third current source 515 is a first detection point DETN. Located between the third current mirror 516 and the fourth current source 517 is a second detection point DETP.

The function of the op-amp 501, the fifth N-MOS transistor 507 and sixth N-MOS transistor 508 is to act as a ClassAB audio amplifier core where the fifth N-MOS transistor 507 and sixth N-MOS transistor 508 provide the output power stage of the ClassAB audio amplifier.

The seventh N-MOS transistor 509 and ninth N-MOS transistor 510 are arranged to provide a copy of the current flow in the fifth N-MOS transistor 507.

The eighth N-MOS transistor 510 and tenth N-MOS transistor 512 are arranged to provide a copy of the current flow in the sixth N-MOS transistor 508.

The audio stage 500 can be categorised into three sections; an audio class AB amplifier section 518, a sink current detection section 519 and a sourced current detection section 520. The audio class AB amplifier section 518 includes the op-amp 501, the fifth N-MOS transistor 507 and the sixth N-MOS transistor 508. The sink current detection section 519 includes the seventh N-MOS transistor 509, the eighth N-MOS transistor 510, the second current mirror 514 and the third current source 515. The source current detection section 520 includes the ninth N-MOS transistor 511, the tenth N-MOS transistor 512, the third current mirror 516 and the fourth current source 517.

The audio stage 500 operates in the following manner.

When no load is connected to the output of the audio amplifier VOUT (i.e. when a headset has not been connected to the detection circuit) the current through the fifth N-MOS transistor 507 and the sixth N-MOS transistor 508 will be equal to the ClassAB output power stage biasing current. In this configuration the current flow from the second current mirror 514 to the third current source 515 will be equal to A.I_{N} - A.I_{P} (i.e. the copy of the current flowing in the sixth NMOS transistor 508 minus the copy of the current flow in the fifth NMOS transistor 507), which will be less than the current thresholds of the third current source 515 thereby setting the first detection point DETN to 0. Additionally, the current flow from the fourth current source 517 to the third current mirror 516 will be equal to (A.I_{P} - A.I_{N}), which will be less than the current thresholds of the fourth current source 517 thereby setting the second detection point DETP to 1.

When a load is connected to the output of the audio amplifier VOUT (i.e. when a headset is connected to the detection circuit) the current through the fifth N-MOS transistor 507 and the sixth N-MOS transistor 508 will no longer be equal.

When a headset 202 is connected to the detection circuit 201, via the 100uF capacitor 228, either a positive or negative 32kHz alternating signal and/or audio signal could be output from the audio stage.

For a positive 32kHz alternating out of band signal and/or audio signal output from the audio stage causes a large current lp to be sourced by the fifth N-MOS transistor 507 where I_{P} > I_{N} and Al_{P} > A.I_{N}. The current flow from the second current mirror 514 equals (A.I_{N} - A.I_{P}), which is greater than the third current source 515 making DETN = 1, thereby give a headset detection signal on Vout for a positive alternating signal.

For a negative 32kHz alternating out of band signal and/or audio signal output from the audio stage causes a large current lp to be sourced by the fifth N-MOS transistor 507 where lp < I_{N} and Al_{P} < A.I_{N}. The current flow into the third current mirror 514 equals (A.I_{P} - A.I_{N}) which is greater than the fourth current source 517 making DETP = 0, thereby give a headset detection signal on Vout for a negative alternating signal.

The state of DETN and DETP allows a headset presence to be detected using simple logic where a flag can be generated showing whether a headset is present. Such that if DETN = 1 or DETP = 0 then a headset has been detected and if DETN = 0 or DETP = 1 then no headset has been detected (i.e. there is no resistive load on Vout).

## Claims

1. Apparatus for detecting a module comprising a detector arranged to use an alternating out of band signal to detect if a module is coupled to the apparatus.

2. Apparatus according to claim 1, wherein the alternating out of band signal is an audio signal having a frequency above a users hearing range.

3. Apparatus according to claim 1 or 2, wherein the detector is arranged to use the alternating out of band signal to detect the presence of a resistive load associated with the module.

4. Apparatus according to any preceding claim, further comprising an amplifier, wherein the out of band signal is input into the amplifier to cause the amplifier to generate a current flow when a module is capacitively coupled to the apparatus; and means for detecting a current flow generated by the amplifier.

5. Apparatus according to any preceding claim, wherein the detector forms part of a clamp stage of a circuit for determining if a module has been capacitively coupled to the apparatus.

6. Apparatus according to any preceding claim, wherein the detector forms part of a driver stage of a circuit for determining if a module has been capacitively decoupled from the apparatus.

7. Apparatus according to claim 6, further comprising means for switching between the driver stage and clamp stage dependent upon whether a module is capacitively coupled to the apparatus.

8. Apparatus according to any preceding claim, wherein the module is a loudspeaker.

9. Apparatus according to claim 7, wherein the loudspeaker forms part of a radiotelephone headset.

10. Radiotelephone comprising an apparatus according to any preceding claim.
